# EUROPEAN PATENT APPLICATION

(11) **EP 2 554 955 A1**
(43) Date of publication of application: **06.02.2013**
(21) Application number: 11176739.8
(22) Date of filing: 05.08.2011
(51) Int. Cl.: G01F 23/24, C21C 5/46

(54) **Method and apparatus for measuring liquid metal height and the thickness of a slag layer in a metallurgical vessel**

(71) Applicant: Tata Steel UK Limited, 1970 CA IJmuiden (NL)
(72) Inventor: Millman, Maurice Stuart, 1951 JZ Velsen-Noord (NL)
(74) Representative: Bodin, Andre

(57) **Abstract**

A method and apparatus for measuring the liquid metal height and/or the thickness of a slag layer floating on the liquid metal in a metallurgical vessel by means of an elongated and electrically conductive probe, wherein the probe has a proximal end electrically connected to measuring means, and a distal end, wherein the probe is movable from above the slag layer through the slag layer into the liquid metal, the method comprising the steps of:
a) lowering the distal end of the probe through the slag layer into the liquid metal;
b) measuring the electrical potential over the probe during the lowering of the distal end through the slag layer into the liquid metal;
c) comparing the measured electrical potential to a reference potential;
d) relating the change in electrical potential to the vertical position of the distal end of the probe;
e) determining the vertical position of the upper slag level and the vertical position of the upper level of the liquid metal.

## Description

This invention relates a method and apparatus for measuring the liquid metal height and the thickness of a slag layer floating on the liquid metal in a metallurgical vessel

Examples of such metallurgical vessels are Electric Arc Furnaces (EAF) or Ladle Arc Furnaces (LF). An EAF is a furnace that heats and melts charged material by means of electrical power discharged in the form of a plasma arc. Graphite electrode(s) are used to transmit the electrical power and as a result of the application of a very high voltage to the electrode(s), a plasma arc forms between the charged material and the electrode tip(s). The electrodes can be automatically raised and lowered by a positioning system. An LF may be used to heat or maintain the temperature of liquid metal during processing after tapping from (e.g.) an EAF or to change the chemical composition of the liquid metal. For a LF, electrical energy is converted into heat energy in much the same way as for an EAF. A plasma arc forms between the liquid metal and the electrode tip(s) but in the case of a LF, the generated heat is dissipated through the slag to the liquid metal by stirring the liquid metal and slag either by injection of gas through a top lance or through porous plugs in the ladle bottom or, by the influence of an electromagnetic field.

In such a metallurgical vessel a layer of molten, non-metallic material known as slag is present over the upper surface of the molten metal. Such slag floats on the liquid metal and is formed from a mix of non-metallic materials which are deliberately added during the refining process, or the slag arises from previous operations and non-metallic compounds that are separated from the metal during the refining operation, or combinations thereof. The resulting layer of slag over the upper surface of the molten metal, such as steel, serves the useful purposes of helping to contain the generated heat by covering the plasma arc and reducing the amount of radiative heat losses, regulating the chemistry of the liquid metal, isolating the melt from the ambient atmosphere (air), and reducing heat losses by thermally insulating the liquid metal.

During emptying of a metallurgical vessel by tapping, it may be desirable to drain out the maximum amount of the molten metal to maximise furnace yield. However, in the course of this tapping process, slag may also flow through the outlet nozzle of the vessel. The requirements for downstream processing of the liquid metal tapped from the vessel may be such that the product quality could be degraded if the amount of this 'tapping slag' is too high. Therefore, it may be advantageous to minimise the amount of slag that is drained out during the tapping process by leaving some metal in the metallurgical vessel and under these conditions, furnace yield will be reduced. In an EAF it is often necessary to leave some liquid metal in the furnace to assist in the initiation of arcing of the electrodes for the next charge and the liquid metal left behind in the EAF is commonly called the 'hot heel'. In any case, it is desirable to determine the amount of slag carried over with the liquid metal so that further processing can be carried out in a controlled and consistent manner.

The inventors have observed that there is a need for accurately measuring not only the height of the liquid metal in such metallurgical vessels but also for accurately measuring the thickness of the layer of slag floating on top of the liquid metal.

For example, such a need is required when the liquid metal contained in a ladle is processed in an LF. Here, an addition of alloy materials known as a "trim additions" may be added to the liquid metal and thoroughly mixed therein to bring the chemistry of the liquid metal to within its required composition specification for the desired final product. In order to calculate the required weight of trim additions it is necessary to have accurate knowledge of the weight of liquid metal. After the trim addition has been mixed into the liquid metal, the liquid metal is immediately analysed in order to confirm that its chemical analysis meets its required composition specification and if it does not then, a further trim addition may be needed. Because of the time, effort, and expense associated trim additions, it is highly desirable that the correct amount of trim addition is made. However, because of the chemical reactivity of the layer of slag that floats on the liquid metal delivered into the ladle treatment station, some of the trim addition may become compounds in the slag instead of components in the liquid metal. If the depth (mass) of the slag is accurately known, then the amount of alloy additives in the trim addition may be adjusted to compensate for the loss of such chemicals through their reaction with the slag. Often, within the LF-operations, the slag is required to react metallurgically with the liquid metal in order to help refine the metal and under these circumstances, it is necessary for both the chemistry of the slag and the depth (mass) of slag to be at optimum levels for optimal metal refining. Therefore, it may be necessary, within the LF-operations, to add slag component additions in order to ensure the required slag depth (mass) and chemistry and therefore, the initial slag chemistry and slag depth (mass) must previously be known in order to carry out this procedure effectively. Techniques for measuring the level of molten metal covered by a layer of slag in a metallurgical vessel are known in the art.

The simplest method for determining the depth of molten metal in a metallurgical vessel is visual observation. If the operator of the facility knows the approximate thickness of the layer of slag over the liquid metal, the depth of the liquid metal in the vessel can be approximately estimated by observing where the top of the slag layer is relative to the top of the vessel. But, such a method based upon visual estimations is necessarily inaccurate. Also known are liquid metal depth measuring devices which employ coils designed to generate eddy current changes in response to the proximity of the molten metal. While such devices may be able to measure the level of liquid metal more accurately than visual techniques, they still provide only an approximation of the depth of the liquid metal.

An apparatus and method for quickly determining the depth of slag in a furnace or ladle is disclosed in US3850416 where a pyrolytic coating is applied to a metallic lance so that upon immersion through said slag, the lance will be cleanly etched by the metal without hindrance from the slag. Determination of the depth is obtained by measuring between the top of the etched marking and an indicator which is aligned with the top of the slag layer. However, this method has proved to be inaccurate. Other similar simple methods based on dipped probes have been used but the accuracy of the results is again limited.

Techniques based on the reflection of radar or microwaves from the slag surface have also been used on molten metal ladles, but these give the position of the upper slag surface and not its depth.

The object of the invention is to provide a method for measuring the liquid metal height and/or the thickness of a slag layer floating on the liquid metal in a LF.

Another object of the invention is to provide a method for reducing or eliminating the need for additional trim additions in an LF.

Another object of the invention is to provide a method for enabling accurate slag component additions in order to ensure a required slag chemistry and slag layer thickness or depth (mass) for optimum steel refining in an LF.

Another object of the invention is to provide a method for determining the level of liquid metal in an EAF and/or the thickness of a slag layer floating on the liquid metal in an EAF at the end of each melting process.

Another object of the invention is to provide a reliable, simple and rugged, and inexpensive use of a system to determine the level of molten metal and/or the thickness of the slag layer in a metallurgical vessel.

Another object of the invention is to provide a system which is easily installed and used in connection with pre-existing equipment so as to minimise the effort and expense associated with installation.

One or more of these objects of the invention are reached with the method according to claim 1 and the apparatus according to claim 11. Preferable embodiments are described in claims 2 to 10 and 12 to 15.

The invention provides a method for measuring the level of liquid metal and/or the thickness of a slag layer floating on a liquid metal in a metallurgical vessel by means of an elongated and electrically conductive probe, wherein the probe has a proximal end electrically connected to measuring means, and a distal end, wherein the probe is movable from above the slag layer through the slag layer into the liquid metal, the method comprising the steps of:
a) lowering the distal end of the probe through the slag layer into the liquid metal;
b) measuring the electrical potential over the probe during the lowering of the distal end through the slag layer into the liquid metal;
c) comparing the measured electrical potential to a reference potential;
d) relating the change in electrical potential to the vertical position of the distal end of the probe;
e) determining the vertical position of the upper slag level and the vertical position of the upper level of the liquid metal.

The system thus mainly comprises a movable probe member formed from an electrically conductive material in combination with a system for measuring the change in electrical current and/or voltage for detecting the location of the interfaces between liquid metal and slag, and slag and ambient atmosphere (air).

The electrical potential or voltage applied to the probe is preferably between 1 volt and 2000 volts. More preferably the maximum voltage is 1000 volt and even more preferably the maximum voltage is between 250 and 750 volt. A voltage of about 500 volt single phase AC appears to work well.

In a preferred embodiment, the probe with which the thickness of the slag layer and/or the level of the liquid metal is determined is one of the electrodes in the metallurgical vessel. In an EAF or LF the vertical position of the electrodes can be controlled individually. When the electrodes are not in use to heat and melt the metal in an EAF or to heat the liquid metal in a LF an electrode which is to be used as the probe can be lowered into and through the slag layer into the liquid metal. Each passage through an interface results in a change in electrical potential and current through the probe. The change in electrical potential and/or current is registered using measuring means such as e.g. a voltage meter, ammeter, or a data logging device. So the consecutive passage through the air (ambient atmosphere)/slag interface and the slag/metal interface can be measured and detected by the change in electrical response. By simultaneously monitoring and logging the position of the probe distal end with respect to a reference position the thickness of the slag layer can be measured accurately as well as the position of the level of the liquid metal in the vessel. After and prior to these measurements the probe can be raised to the same level as the other melt electrodes and be used together with the other melt electrodes for electric arc heating in the standard manner.

In an embodiment the movable probe is constructed of a material that can be reused or be used multiple times and is preferably constructed of an electrically conductive material such as carbon or graphite. In an embodiment the movable probe is one or more of the melting or heating electrodes in the metallurgical vessel.

The vertical position of the distal end of the probe is measured by means of a displacement measurement, or by using a reference scale, or by applying a 'make or break' circuit or by using a laser beam and sensor combination or imaging device. In a preferable embodiment the vertical position of the distal end of the probe is calibrated against the interruption of a laser beam which is mounted at a known reference height, said interruption being detected by a sensor device. This allows a very precise knowledge of the position of the distal end of the probe throughout the process of lowering the distal end through the slag layer and into the liquid metal.

In a preferable embodiment the liquid metal is ferrous, preferably steel, and the metallurgical vessel is a vessel used in the production of steel. However, the method and the apparatus can be used in the production of any metal that needs to be melted in an EAF or maintained in a molten state in an LF.

In a preferable embodiment the probe moves substantially in a vertical direction during lowering of the distal end of the probe through the slag layer into the liquid metal. Although the principle still works if the probe moves in another direction with a vertical component, e.g. not perpendicular to the level of the slag layer, most melt or heating electrodes are mounted so as to move substantially up and down in a vertical direction. However, for instance for the application of the technology in a metallurgical vessel that does not use arc heating as a source of heat, it may be preferable to mount the probe such that it moves in a downwardly direction other than perpendicular to the slag layer.

In a preferable embodiment in an EAF the 'hot heel' weight may be calculated by applying suitable statistical regression analysis to link the measured liquid metal height just before tapping with the measured tap weight, the measured furnace life and the 'hot heel' weight.

In a preferable embodiment in an EAF the density of each individual charge type may be calculated by applying suitable statistical regression analysis to link the measured liquid metal height just before tapping with the measured weights of the individual charge types and the measured furnace life.

In a further embodiment in an EAF, an indication of the amount of each individual charge type that has been melted after each 'power-off' may be calculated by applying suitable statistical regression analysis to link the measured liquid metal height after each 'power-off' with the measured weights of the individual charge types, the calculated density of each individual charge type and the measured furnace life.

The invention additionally includes a method for determining the assured vertical position of the distal end of the probe by reference to a fixed and known position by further positioning the distal end of the probe at a point of reference.

As the probe is a melt electrode and already a part of the installation, no additional probes need to be installed and maintained. Also, the melt electrodes are developed for functioning under continuous production of liquid metal under very demanding conditions. Therefore, the probe is simple and rugged, and inexpensive to use. The apparatus to perform the method is therefore easily installed as the main component is already there and used in connection with pre-existing equipment so as to minimize the effort and expense associated with installation.

Under normal operating conditions, the measurement time of the operation of the liquid metal and slag depth measuring device of the invention is only a few seconds and it takes place during the time of the LF or EAF procedures that will not cause any loss of productivity.

In either case, the invention may be used to determine the level of molten steel or other metal in a metallurgical vessel using electric arc heating as a source of heat. Alternatively, the invention may be used to accurately measure the depth of the layer of slag covering the liquid metal at a ladle treatment station in order to minimize the need for more than one trim addition of alloy chemicals, or to optimise slag-metal reactions or that a more accurate measurement of metal volume can be made to aid with optimisation of process energy and additions, or to indicate the density of individual scrap types, or to indicate scrap melting capability.

The principle of the invention could also be adapted to metallurgical vessels not using arc heating as a source of heat. Naturally, in that case, the probe and its component parts are not already a part of the installation, but the design of the LF or EAF probes can be suitably translated and used in the same manner.

According to a second aspect, the invention is also embodied in an apparatus for measuring the thickness of a slag layer floating on a liquid metal in a metallurgical vessel, the apparatus comprising an elongated and electrically conductive probe, the probe having a proximal end electrically connected to measuring means, and a distal end, wherein in use the probe is movable from above the slag layer through the slag layer into the liquid metal, the apparatus further comprising means to relate the change in electrical potential to the vertical position of the distal end of the probe and means to determine the vertical position of the upper slag level and the vertical position of the upper level of the liquid metal.

The invention is now further explained by means of the following schematic and non-limitative drawings.

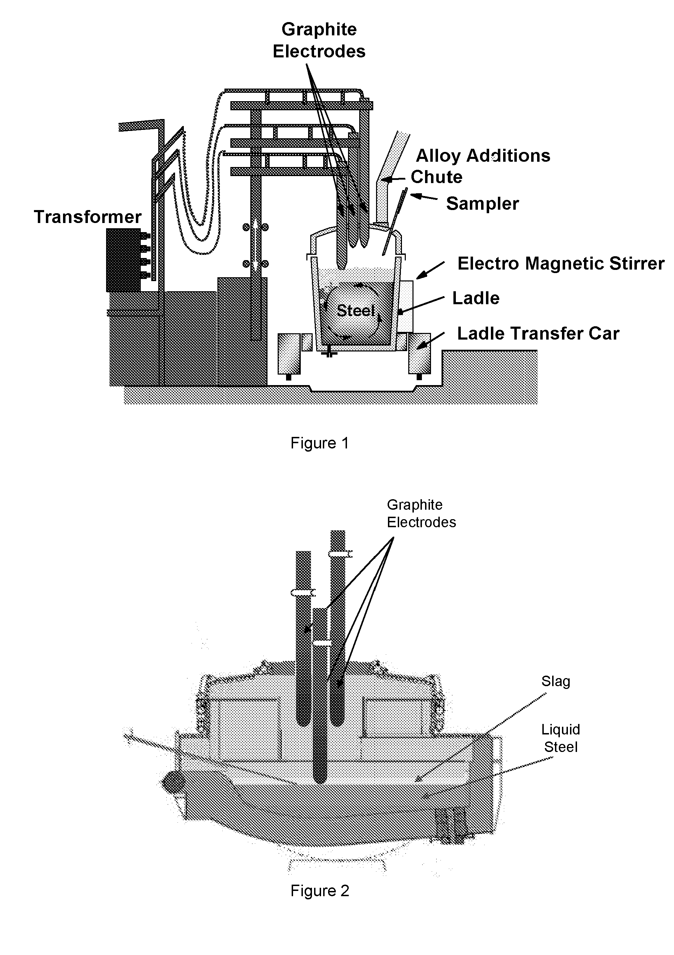

Fig. 1 is a schematic diagram of the steel (or other liquid metal) and slag depth measuring device of the invention installed in a Ladle Furnace.

With reference now to Fig. 1, the ladle furnace consists of a station at which steel in the ladle can be electrically reheated by up to 4.5 degrees C per minute, by graphite electrodes passing through a water-cooled lid. Stirring, which is required to ensure efficient thermal transfer and to minimise refractory attack, may be by injection of gas through a top lance or through porous plugs in the ladle bottom or, by the influence of an electromagnetic field. Alloy additions are made through holes in the lid and, powder and/or wire injection can also be included. The system requires that a basic slag cover is established over the steel to optimise arc stability, minimise arc length and protect the slag line refractories. Such slags can have considerable desulphurising capacity and provide for inclusion sinks to produce very clean steel. The process enables tapping temperatures to be lowered by up to 60°C, and thereby, ensures significantly lower phosphorus and nitrogen levels to be achieved at lower levels of slag oxidation. The reduced tap temperature allows increased scrap melting and greater output, with lower flux requirement and process cost and, considerably increased BOS converter refractory life. The ability to achieve low sulphur, phosphorus and nitrogen contents with a very high level of composition and temperature control, has placed the ladle furnace at the forefront of secondary steelmaking technology.

The liquid metal and slag depth measuring device of the invention may be applied at any stage of ladle furnace processing when the power is off but is more often applied directly after the first heating pattern which is when the slag is assured of having reached a fully molten state.

Fig. 2 is a schematic diagram of the steel (or other liquid metal) and slag depth measuring device of the invention installed in an Electric Arc Furnace.

With reference now to Fig. 2, the electric arc furnace consists of a method of melting and heating a solid (or liquid) charge containing iron units in the form of steel scrap and/ or alternative iron units (AIU) by application of electrical (and often chemical) energy. The electrical heating method may be either AC or DC wherein either three electrodes may be used (AC) or a single electrode (DC) may be used to assist conversion of electrical energy into heat energy. One or more scrap baskets containing the solid charge are used to load the electric arc furnace and each load is melted down during each 'power-on' period before charging with additional loads during each 'power-off' period. Each load may consist of several alternative solid (or liquid) charge materials. As each component of the solid charge melts, the liquid metal height inside the electric arc furnace increases. The liquid metal and slag depth measuring device of the invention may be applied at any stage of electric arc furnace processing during the 'power-off' period to indicate the progress of the melting capability of the furnace and, when all the scrap has melted, the liquid metal depth will be directly related to the overall density of the charge. By this means and by application of statistical methods, the density of the individual charge components may also be derived. Changes in slag depth during progress of the melting process may also be directly monitored by application of the measuring device of the invention. After the final scrap basket charge has been melted and the liquid steel is at the required composition and temperature, by means of the measuring device of the invention, the liquid metal depth and slag depth may be measured just before the furnace is tapped. By this means and with knowledge of the measured weight of steel (or other liquid metal) that is tapped and measured furnace life and by application of statistical regression methods, the hot heel weight may be calculated.

In an experiment the principle of the invention was demonstrated by applying 500 Volts single phase AC to a single electrode of the Aldwarke 'N' furnace of Tata Steel which was subsequently lowered through the slag layer and into the liquid steel. At the air/slag interface the voltage changed sharply from: 500 Volts to 240 Volts and subsequently at the slag/metal interface the voltage changed sharply to 0 volts. These changes in voltage clearly link the electrode tip position to the slag layer thickness and to the liquid metal height.

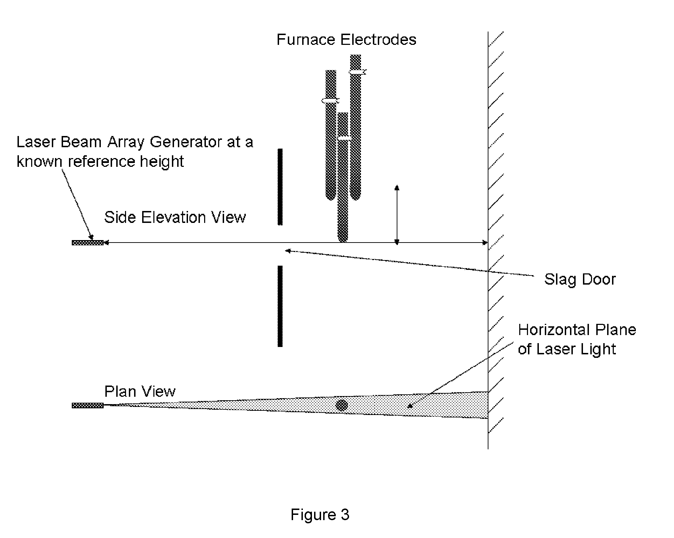

Fig. 3 is a schematic diagram of the Side Elevation View and Plan View of Laser Beam Array Generator at a known reference height.

With reference now to Fig. 3, the absolute tip position of the electrode is determined by calibrating its position against a laser beam, preferably a horizontal plane laser beam, positioned at a known reference height. The tip position is measured when it interrupts the laser beam which is detected by a sensor. This laser beam and sensor combination may be applied inside the furnace, but it is preferable that the laser beam and sensor combination is applied outside the furnace, e.g. on or above or below the furnace roof. This allows determining the exact position of the electrode tip as the specific electrode is drawn up or let down through it. This approach (application outside the furnace), has several practical advantages over a measurement inside the furnace, such that it requires less power and is therefore inherently safer and cheaper, is less prone to disturbance and pollution, and that it is easier to maintain. The determination of the exact position of the tip of the electrode is important because the position of the tip in combination with the sharp changes in voltage at the air/slag interface and the slag/metal interface determines the slag layer thickness and the measurement accuracy of the liquid metal height.

## Claims

1. A method for measuring the liquid metal height and/or the thickness of a slag layer floating on the liquid metal in a metallurgical vessel by means of an elongated and electrically conductive probe, wherein the probe has a proximal end electrically connected to measuring means, and a distal end, wherein the probe is movable from above the slag layer through the slag layer into the liquid metal, the method comprising the steps of:
a) lowering the distal end of the probe through the slag layer into the liquid metal;
b) measuring the electrical potential over the probe during the lowering of the distal end through the slag layer into the liquid metal;
c) comparing the measured electrical potential to a reference potential;
d) relating the change in electrical potential to the vertical position of the distal end of the probe;
e) determining the vertical position of the upper slag level and the vertical position of the upper level of the liquid metal.

2. A method according to claim 1, where the movable probe is constructed of a material that can be reused or be used multiple times.

3. A method according to claim 1 or 2, where the movable probe is constructed of an electrically conductive material such as carbon or graphite.

4. A method according to any one of claims 1 to 3, where the movable probe is one or more of the melting or heating electrodes in the metallurgical vessel.

5. A method according to any one of claims 1 to 4, where the metallurgical vessel is an electric arc furnace.

6. A method according to any one of claims 1 to 4, where the metallurgical vessel is a ladle furnace.

7. A method according to any one of claims 1 to 6, wherein the vertical position of the distal end of the probe is measured by means of a displacement measurement, or by using a reference scale, or by applying a 'make or break' circuit or by using a laser beam and sensor combination or imaging device.

8. A method according to claim 7, wherein the vertical position of the distal end of the probe is calibrated against the interruption of a laser beam which is mounted at a known reference height, said interruption being detected by a sensor device.

9. A method according to any one of claims 1 to 8, wherein the liquid metal is ferrous.

10. A method according to any one of claims 1 to 9, wherein the probe moves substantially in a vertical direction during lowering of the distal end of the probe through the slag layer into the liquid metal.

11. Apparatus for measuring the liquid metal height and/or the thickness of a slag layer floating on the liquid metal in a metallurgical vessel, the apparatus comprising an elongated and electrically conductive probe, the probe having a proximal end electrically connected to measuring means, and a distal end, wherein in use the probe is movable from above the slag layer through the slag layer into the liquid metal, the apparatus further comprising means to relate the change in electrical potential to the vertical position of the distal end of the probe and means to determine the vertical position of the upper slag level and the vertical position of the upper level of the liquid metal.

12. Apparatus according to claim 11 wherein the movable probe is constructed of a material that can be reused or be used multiple times.

13. Apparatus according to claim 11 or 12, wherein the movable probe is constructed of an electrically conductive material such as carbon or graphite.

14. Apparatus according to any one of claims 11 to 13, where the metallurgical vessel is an electric arc furnace or a ladle furnace.

15. Apparatus according to any one of claims 11 to 14, wherein the measurement means to measure the vertical position of the distal end of the probe is a displacement measurement, or a reference scale, or a 'make or break' circuit or a laser beam and sensor combination or imaging device.
